# EUROPÄISCHE PATENTSCHRIFT

(11) **EP 3 873 704 B1**
(45) Veröffentlichungstag und Bekanntmachung des Hinweises auf die Patenterteilung: **13.04.2022**
(21) Anmeldenummer: 20839367.8
(22) Anmeldetag: 31.12.2020
(51) Int. Cl.: B25J 9/16, E21D 11/40, B25J 19/02, E21D 9/00

(54) **VERFAHREN UND VORRICHTUNG ZUR AUTOMATISIERTEN ANORDNUNG VON TUNNELAUSBAUSEGMENTEN**
METHOD AND DEVICE FOR THE AUTOMATED ARRANGEMENT OF TUNNEL LINING SEGMENTS
PROCÉDÉ ET DISPOSITIF DE MISE EN PLACE AUTOMATISÉE DE SEGMENTS DE SOUTÈNEMENT DE TUNNEL

(30) Priorität: 31.12.2019 DE 102019135908; 17.01.2020 DE 102020101081
(43) Veröffentlichungstag der Anmeldung: 08.09.2021
(73) Patentinhaber: Herrenknecht AG, 77963 Schwanau (DE)
(72) Erfinder: SENG, Frederic, 79341 Kenzingen (DE); PABST, Stefan, 77933 Lahr (DE)
(74) Vertreter: Klickow & Wetzel PartGmbB
(86) Internationale Anmeldenummer: PCT/EP2020/088085
(87) Internationale Veröffentlichungsnummer: WO 2021/136837

(56) Entgegenhaltungen:
- AT-B- 409 161
- JP-A- H08 296 400
- JP-A- 2019 085 782
- US-A1- 2013 158 947

## Beschreibung

Die Erfindung betrifft eine Vorrichtung und ein Verfahren zum automatisierten Einbau wenigstens eines Tunnelausbausegments eines Tunnelausbaurings zum Ausbauen eines von einer Tunnelbohrmaschine aufgefahrenen Tunnelabschnitts, die mit der Tunnelbohrmaschine koppelbar ist, und ein Verfahren zum automatisierten Einbau wenigstens eines Tunnelausbausegments eines Tunnelausbaurings.

Beim Auffahren eines Tunnels mit einer Tunnelbohrmaschine werden als Ausbau des Tunnels u.a. Ringe aus Stahlbetonsegmenten (Tübbinge) eingesetzt. Diese werden, beispielsweise unter einem Schild der Tunnelbohrmaschine oder direkt an die Tunnelwand mittels eines Erektors platziert. Dafür sieht der Erektor beispielsweise einen Manipulator vor, der gegenüber der Basis des Erektors axial, radial und tangential verfahrbar ist.

Solche Manipulatoren sind beispielsweise aus der Robotik bekannt. Sie stellen dabei beispielsweise den beweglichen Teil des Roboters dar und ermöglichen eine physikalische Interaktion mit der Umgebung oder mit Gegenständen in der Umgebung. Dabei werden durch den Manipulator beispielsweise über spezielle Werkzeuge Arbeiten oder Aufgaben durchgeführt. Die Werkzeuge werden weiterhin über Aktuatoren im Raum positioniert. Weiterhin werden dabei Messungen durchgeführt, die entweder die Positionierung oder das Bearbeiten ermöglichen und/oder Daten zur Auswertung sammeln. Dabei weist der Manipulator beispielsweise tragende Bestandteile auf, die über die Aktuatoren beweglich miteinander verbunden sind.

Zum Platzieren des wenigstens einen Tunnelausbausegments ist hier am Manipulator ein Aufnahmewerkzeug angeordnet. Hierbei kann es sich beispielsweise um Greifwerkzeuge und/oder Ansaugwerkzeuge handeln. Das Werkzeug bzw. der Manipulator selbst werden über Aktuatoren bewegt. Die Greifwerkzeuge greifen dabei beispielweise einen am Tunnelausbausegment befestigten Pin. Die Saugwerkezuge wiederum saugen beispielsweise direkt das Tunnelausbausegment an.

Die Tunnelausbausegmente werden über eine Zuführeinheit (Segmentfeeder) in definierter Reihenfolge einem Aufnahmeort zugeführt. Am Aufnahmeort wird das Tunnelausbausegment vom Werkzeug des Manipulators aufgenommen, angehoben und zum jeweiligen Platzierungsort bewegt. Dafür sind Aktoren vorgesehen, die entsprechende Rotations-, Linear- und/ oder Kippbewegungen des Werkzeugs ermöglichen.

Die Bewegungen des Manipulators bzw. dessen Werkzeugs werden bisher von einem Erektorfahrer gesteuert. Dabei werden über entsprechende Steuerelemente die einzelnen Aktoren des Erektors bzw. des Manipulators, bevorzugt ferngesteuert, angesteuert. Hierbei handelt es sich um eine gefährliche Tätigkeit, da der Erektorfahrer sich im Bereich des Erektors befinden muss, um die Tunnelausbausegmente auf Sicht platzieren zu können. Weiterhin erfolgt das Bewegen des Erektors/Manipulators aufgrund seiner vielen Freiheitsgrade und unterschiedlichen Aktoren und der notwendigen Präzision bei der Platzierung der Tunnelausbausegmente in der Bewegungsgeschwindigkeit gedrosselt, um entsprechend den Ablauf der Aufnahme, Bewegung und Platzierung in ihrer Komplexität sicher durchführen zu können, ggf. unterstützt durch weitere Personen vor Ort.

Bei dem Erektor handelt es sich um eine Art Spezialkran, dessen Werkzeug beispielsweise hydraulisch über Achsen in radialer, tangentialer und axialer Richtung in Bezug auf die Maschinenachse der Tunnelbohrmaschine beispielsweise verfahrbar ist. Die radiale Achse selber kann bauartbedingt beispielsweise als Teleskopeinheit oder über eine Parallelanlenkung ausgeführt sein. Zur Aufnahme der Tunnelausbausegmente ist am Manipulator das Werkzeug, auch Erektorkopf genannt, angebracht. Der Erektorkopf weist einen Aufnahmemechanismus auf, um das jeweilige Tunnelausbausegment anheben und bewegen zu können. Zur Feinausrichtung lässt sich die Lage des Erektorkopfs um beispielsweise hydraulisch angetriebene Drehachsen bewegen in Form von Rollen, Nicken und Gieren. Generell bewegen die Aktoren das Werkzeug bezogen auf die Maschinenachse der Tunnelbohrmaschine. Dabei wird das Werkzeug beispielsweise axial entlang der Maschinenachse, radial ausgehend von der Maschinenachse und drehend um die Maschinenachse (Rollen) bewegt. Weitere Drehbewegungen können beispielsweise auch um Achsen radial zur Maschinenachse der Tunnelbohrmaschine erfolgen (Gieren und Nicken).

Ein Tunnelausbauring besteht aus mehreren Tunnelausbausegmenten. Die Anzahl der Segmente ist je nach Ringaufbau variabel. Die tangentiale Position der einzelnen Segmente im Ring ist je nach Aufbau des Tunnelausbaus vorgegeben. Je nach Bauart kann ein Ring aus geraden Segmenten, bei denen die Längsfugen senkrecht zu den Ringfugen stehen oder aus einer Kombination beispielsweise von trapezförmigen, halbtrapezförmigen, geraden Tunnelausbausegmenten und/oder anderen Formen bestehen. Durch minimal unterschiedliche axiale Längenmaße der Segmente werden durch ein verdrehtes Verlegen zueinander Tunnelkurven realisiert.

An den Segmenten an ihren Kontaktflächen an den Längsfugen und/oder an den Ringfugen können Öffnungen für Montagehilfen, sogenannte Dübel, vorgesehen sein. Die Dübel werden entsprechend in die dafür vorgesehenen Öffnungen in das Tunnelausbausegment eingesetzt. Ist das Segment an der entsprechenden Platzierungsposition angekommen, werden die Montagehilfen in die dafür vorgesehenen Öffnungen der bereits platzierten Segmente eingeführt. Hierfür nimmt der Erektorfahrer eine Feinjustierung der Werkzeugausrichtung vor, um die Montagehilfen entsprechend einzuführen. Im Anschluss daran wird dann das Segment entsprechend platziert.

Nach dem Abbohren eines Hubs der Tunnelbohrmaschine (beispielsweise 1,2 m) wird mit dem Ausbau begonnen. Dafür wird vom Erektor das erste Tunnelausbausegment vom Segmentfeeder aufgenommen. Gleichzeitig werden die im Bereich der Sollplatzierung des Tunnelausbausegments befindlichen Vortriebspressen der Tunnelbohrmaschine zurückgefahren, um den Bereich des zu platzierenden Tunnelausbausegments ausbaubar zumachen. Nachdem das Tunnelausbausegment platziert wurde, werden die Vortriebspressen wieder ausgefahren, um das Tunnelausbausegment an den vorherigen Ausbauring in eine finale Position anzupressen. Dabei werden auch die Randdichtungen der Tunnelausbausegmente auf das notwendige Maß zusammengedrückt. Anschließend wird das Werkzeug des Erektors gelöst und zur Aufnahmeposition zurückgefahren, um das nächste Tunnelausbausegment aufzunehmen. Gleichzeitig werden die entsprechenden Vortriebspressen zurückgefahren und der Ablauf wird wiederholt, bis der vollständige Ring platziert wurde. Mit Einbringen des Schlusssteins in den Tunnelausbausegmentring werden auch die Dichtungen in den Längsfugen komprimiert, der Ring geschlossen und die Tunnelausbausegmente in ihre finale Position gebracht, Position ggf. durch finales Anpressen der Tunnelausbausegmente durch die Vortriebspressen. Nach Abschluss des Ausbaus wird dann zu einem späteren Zeitpunkt ein Ringraum zwischen Tunnelwand und fertigen Ausbauring beispielsweise mit Mörtel verpresst.

Da es sich, wie bereits dargelegt, um eine nicht ungefährliche und anstrengende Tätigkeit handelt, die gleichzeitig auch bedingt durch die Komplexität der Bewegungsmöglichkeiten in verminderter Geschwindigkeit durchgeführt werden muss, besteht schon länger die Bestrebung, den Prozess der Platzierung der Tunnelausbausegmente zur Errichtung des Tunnelausbaurings zu automatisieren. Hierfür sind aus dem Stand der Technik bereits mehrere Ansätze bekannt, siehe unter anderem FR2745327A1, CN104747213A, JPH08-296400A, WO2018065726A1, US20190234214A1, AT409161B, JP2019085782A.

AT409161B offenbart beispielsweise ein Verfahren zum Bau von Tunnelanlagen. bestehend aus den Schritten: - Schaffung eines Hohlraums durch eine Vortriebsmaschine; - Auskleidung des Hohlraums durch Setzen von Tübbing-Segmenten mittels eines Erektors, wobei die Steuerung des Erektors mit Hilfe einer Steuer-Einrichtung durchgeführt wird; - Verbindung der jeweils neu gesetzten Tübbing-Segments mit den bereits gesetzten Tübbing-Segmenten durch Verbindungselemente, wie etwa Dübel oder Bolzen, wobei beim Einsetzen der Tübbing-Segmente die jeweilige Stellung des Erektors messtechnisch erfasst und datentechnisch gespeichert wird. Eine Steigerung der Effizienz wird dadurch erreicht, dass zumindest Teilbereiche des Ausbaus automatisiert werden, wobei über Sensoren die Lage der zu setzen den Tübbing-Segmente in Bezug auf bereits gesetzte Tübbing-Segmente bestimmt wird, und dass der Erektor auf der Basis der von den Sensoren bestimmten Werte gesteuert wird, wobei zusätzlich Positionsdaten erfasst werden.

Da die Tunnelausbausegmente Fertigungstoleranzen unterliegen und auch die aufgefahrene Tunnelwand, gegen die die Tunnelausbausegmente platziert werden, Maßtoleranzen unterliegen, ist es notwendig, dass die genaue Lage der tatsächlich bereits platzierten Tunnelausbausegmente bzw. der vollständigen Tunnelausbauringe im aufgefahrenen Raum erfasst wird. Weiterhin ist es notwendig, die Sollplatzierung des jeweiligen Tunnelausbausegments im Hinblick auf die tatsächlich bereits angeordneten Segmente beim Platzieren anzupassen und auszurichten. Hierfür ist aus dem Stand der Technik bekannt beispielsweise CCD-Kameras, Kontaktsensoren, Laserprofilometer, Radar und Ultraschall einzusetzen. Diese sind teilweise sehr ungenau bedingt durch Umweltbedingungen beim Auffahren mit der Tunnelbohrmaschine wie Feuchtigkeit, Staub, Schmutz, Einbauteile in der Umgebung, usw.

JP2019085782A offenbart weiterhin den Einsatz einer Time of Flight Kamera zur Distanzmessung in einer Tunnelbaummaschine, die an der Tunnelbaumaschine fest montiert ist. Diese dient der Messung des Freibereiches zwischen Maschine und bereits montierten Tunnelsegmenten.

Aufgabe der Erfindung ist es daher, eine Verbesserung der Erfassung für den automatisierten Einbau der Tunnelausbausegmente durchzuführen.

Hinsichtlich der erfindungsgemäßen Vorrichtung wird die Aufgabe durch die Merkmalskombination des Patentanspruchs 1 gelöst. Weitere vorteilhafte Ausführungsformen werden durch die Unteransprüche definiert. Weiterhin wird die erfindungsgemäße Aufgabe hinsichtlich des Verfahrens durch die Merkmalskombination des Patentanspruchs 10 gelöst. Weitere vorteilhafte Ausführungsformen werden durch die Unteransprüche definiert.

Die erfindungsgemäße Vorrichtung zum automatisierten Einbau wenigstens eines Tunnelausbausegments eines Tunnelausbaurings zum Ausbauen eines von einer Tunnelbohrmaschine aufgefahrenen Tunnelabschnitts, die mit der Tunnelbohrmaschine koppelbar ist, weist nicht abschließend folgende Merkmale auf:
- einen Manipulator mit wenigstens einem Werkzeug zum Aufnehmen, Halten und Platzieren des wenigstens einen Tunnelausbausegments, und mit wenigstens einem Aktuator zum Bewegen des wenigstens einen Werkzeugs, wobei das wenigstens eine Werkzeug mittels des wenigstens einen Aktuators in radialer, tangentialer und/oder axialer Richtung in Bezug auf die Maschinenachse der Tunnelbohrmaschine im Raum des durch die Tunnelbohrmaschine errichteten Tunnelabschnitts verfahrbar ist,
- wenigstens einen Werkzeugpositionssensor, der am Manipulator und/oder Werkzeug vorgesehen ist, zur Erfassung der jeweiligen Ist-Position und Ist-Lage des Werkzeugs im Raum des Tunnelabschnitts,
- wenigstens einen Tunnelausbausegmentsensor, der am Manipulator und/oder Werkzeug vorgesehen ist, mit dem eine Ist-Position und/oder Ist- Lage wenigstens eines Abschnitts wenigstens eines bereits angeordneten Tunnelausbausegments erfassbar ist, und/oder mit dem eine Ist-Position und/oder Ist- Lage des jeweils zu platzierenden Tunnelausbausegments erfassbar ist,
- wenigstens eine Steuerung, die auf Einbaudaten der Tunnelausbausegmente zugreift, und die auf die Messdaten des wenigstens einen Werkzeugpositionssensors und des wenigstens einem Tunnelausbausegmentsensor zugreift, und mit der basierend auf den Einbaudaten und Messdaten der wenigstens eine Aktuator und das wenigstens eine Werkzeug steuerbar sind, um das Werkzeug von der Aufnahmeposition zur Soll-Platzierungsposition des jeweiligen Tunnelausbausegments zu bewegen, in die Ist-Platzierungsposition auszurichten und das Tunnelausbausegment gegen wenigstens ein bereits platziertes Tunnelausbausegment eines Tunnelausbaurings anzuordnen,
   wobei wenigstens zwei Tunnelausbausegmentsensoren vorgesehen sind, und wobei es sich bei dem Tunnelausbausegmentsensor um eine Time-of-Flight-Kamera handelt.

Time-of-Flight-Kameras sind 3D-Kamerasysteme, die mit dem Laufzeitverfahren Distanzen messen. Dazu wird die Szene mittels eines Lichtpulses ausgeleuchtet, und die Kamera misst für jeden Bildpunkt die Zeit, die das Licht bis zum Objekt und wieder zurück braucht. Die benötigte Zeit ist direkt proportional zur Distanz. Die Kamera liefert somit für jeden Bildpunkt die Entfernung des darauf abgebildeten Objektes. Vorteilhaft ist dabei, dass eine ganze Szene auf einmal aufgenommen wird und nicht abgetastet werden muss.

Entgegen aller Erwartungen im Hinblick auf sogenannte Time-of-Flight-Kameras, die gemäß dem fachmännischen Wissen insbesondere für den Einsatz über große Distanzen geeignet sind, hat sich gezeigt, dass mit diesen Sensoren auf besonders einfache Weise genaue Lagebestimmungen der bereits platzierten Segmente bzw. Ausbauringe möglich ist. Weiterhin kann besonders genau Lage und Abstand bzw. Ausrichtung der zu platzieren Tunnelausbausegmente in Relation zu den bereits platzierten Tunnelausbausegmenten bestimmt werden, hierbei werden insbesondere die Fugenabstände erfasst. Hierdurch wird es auf einfache Weise für die Steuerung möglich, entsprechende Korrekturen vorzunehmen und die Segmente entsprechend genau zu platzieren. Auch ist es möglich hier dreidimensional zu erfassen im Gegensatz zu Laserprofilometern bzw. anderen Sensoren.

Vorteilhaft ist dabei, dass es sich bei dem wenigsten einen Werkzeug um ein Aufnahmeelement handelt. Hierdurch kann das jeweilige Segment einfach gegriffen und bewegt werden.

Weiterhin ist vorteilhaft, dass es sich bei dem wenigstens einen Werkzeugpositionssensor um eine Wegmesszylinder, Drehwinkelgeber, Lagesensor, Inklinometer und/oder Wegaufnehmer handelt. Vorteilhaft ist weiterhin, dass es sich bei den Daten um einen Verlegeplan der zu platzierenden Tunnelausbausegmente, einen Lieferplan der zu platzierenden Tunnelausbausegmente, eine Position eines Aufnahmeorts zur Aufnahme des jeweils zu platzierenden Tunnelausbausegments, eine Soll-Platzierungsposition des jeweils zu platzierenden Tunnelausbausegments, und/oder Informationen über die Art sowie physikalische Eigenschaften wie beispielsweise Gewicht und Dimensionen des jeweiligen zu platzierenden Tunnelausbausegments handelt. Hierdurch ist es auf einfache Weise möglich, dass die Steuerung alle relevanten Daten für die Ermittlung der notwendigen Ansteuerungen der Aktuatoren erhält, um das Tunnelausbausegment vom Aufnahmepunkt zur Ist-Platzierung zu bewegen.

Eine weitere Lehre sieht vor, dass ein Mensch-Maschine-Schnittstelle mit der Steuerung verbunden ist. Hierdurch lässt sich das automatische Verfahren auf einfache Weise um manuelle Steueranweisungen erweitern.

Eine weitere Lehre sieht vor, dass wenigstens ein zusätzlicher Tunnelausbausegmentsensor, bevorzugt als Time-of-Flight-Kamera oder 2D Kamera, vorgesehen ist. Vorteilhaft ist dabei, dass der zusätzliche Tunnelausbausegmentsensor im Bereich der Tunnelausbausegmentsensoren oder im Bereich des Werkzeugs vorgesehen ist. Die damit erfassten Signale werden dann bevorzugt beispielsweise von der Steuerung mittels Bildverarbeitung ausgewertet. Weiterhin ist vorteilhaft, die Daten der zwei Tunnelausbausegmentsensoren mit den Daten des weiteren Tunnelausbausegmentsensors zu überlagern und/oder zu kombinieren. Hierdurch lassen sich beispielsweise beim Anfahren der Soll-Position auf einfache Weise Hindernisse erkennen. Weiterhin kann dadurch die Kantenerfassung der Tunnelausbausegmente und Spaltmessung zwischen den Tunnelausbausegmenten und zwischen den Tunnelausbausegmenten und der Wandung der Tunnelbohrung unterstützt werden, indem beispielsweise eine Sicherheitsredundanz bzw. schnellere Verarbeitung erreicht werden kann.

Weiterhin kann auf einfache Weise auch eine Vermessung der "Schildschwanzluft", dem Abstand zwischen der Außenseite der Tunnelausbausegmente und der Wandung der Tunnelbohrung durch Abfahren des Bereichs erreicht werden.

Eine weitere Lehre der Erfindung sieht vor, dass die Steuerung mit einer Steuerung der Tunnelbohrmaschine verbunden ist. Hierbei ist vorteilhaft, dass mit der Steuerung der Vorrichtung über die Steuerung der Tunnelbohrmaschine Funktionen der Tunnelbohrmaschine ansteuerbar sind. Hierdurch lassen sich auf einfache Weise Elemente der Tunnelbohrmaschine, die für den automatisierten Einbau der Tunnelausbausegmente betätigt werden müssen, automatisiert mit einer Steuerung ansteuern.

Eine weitere Lehre der Erfindung sieht vor, dass Vortriebspressen der Tunnelbohrmaschine von der Steuerung ein- und ausfahrbar ansteuerbar sind, so dass diese gegen platzierte Tunnelausbausegmente anpressbar sind. Damit kann über die Steuerung auf einfache und sichere Weise ein Halten der Tunnelausbausegmente nach der Platzierung bewerkstelligt werden.

Eine weitere Lehre der Erfindung sieht vor, dass ein Zuführeinheit (Segmentfeeder) zum Zuführen des Tunnelausbausegments zu einem Aufnahmeort zur Aufnahme durch das Werkzeug von der Steuerung ansteuerbar, so dass das Tunnelausbausegment über die Steuerung bereitstellbar ist. Hierdurch kann auf einfache Weise die Zuführung der Tunnelausbausegmente in Abhängigkeit der Platzierung derselben erreicht werden.

Eine weitere Lehre der Erfindung sieht vor, dass ein Sensor der Time-of-Flight-Kamera ein 2D Bild aufnimmt.

Das erfindungsgemäße Verfahren zum automatisierten Einbau wenigstens eines Tunnelausbausegments eines Tunnelausbaurings zum Ausbauen eines von einer Tunnelbohrmaschine aufgefahrenen Tunnelabschnitts mit einer Vorrichtung, wie zuvor beschrieben, an der ein mit wenigstens einem Werkzeug zum Aufnehmen, Halten und Platzieren des wenigstens einen Tunnelausbausegments bestückter Manipulator vorgesehen ist, und die in einer Tunnelbohrmaschine vorgesehen ist, weist nicht abschließend folgende Merkmale auf,
- wobei das wenigstens eine Werkzeug mit wenigstens einem Aktuator in radialer, tangentialer und/oder axialer Richtung in Bezug auf die Maschinenachse der Tunnelbohrmaschine im Raum des durch die Tunnelbohrmaschine errichteten Tunnelabschnitts bewegt wird,
- wobei mit wenigstens einem Werkzeugpositionssensor, der am Manipulator und/oder Werkzeug vorgesehen ist, eine Ist-Position und Ist-Lage des Werkzeugs im Raum des Tunnelabschnitts erfasst wird,
- wobei mit wenigstens einem Tunnelausbausegmentsensor, der am Manipulator und/oder Werkzeug vorgesehen ist, eine Ist-Position und/oder Ist- Lage wenigstens eines Abschnitts wenigstens eines bereits angeordneten Tunnelausbausegments erfasst wird, und/oder wobei mit dem wenigstens einen Tunnelausbausegmentsensor eine Ist-Position und/oder Ist-Lage des jeweils zu platzierenden Tunnelausbausegments erfasst wird,
- wobei wenigstens eine Steuerung bereitgestellt wird, die auf Einbaudaten der Tunnelausbausegmente sowie auf die Messdaten des wenigstens einen Werkzeugpositionssensors und des wenigstens einem Tunnelausbausegmentsensor zugreift,
- wobei die wenigstens eine Steuerung basierend auf den Einbaudaten und Messdaten den wenigstens einen Aktuator und das wenigstens eine Werkzeug steuert, so dass das Werkzeug mit dem Tunnelausbausegment von dessen jeweiligen Aufnahmeposition zu dessen jeweiligen Soll-Platzierungsposition bewegt wird und das Tunnelausbausegment basierend auf den Messdaten des Tunnelausbausegmentsensors in die Ist-Platzierungsposition ausgerichtet und gegen wenigstens ein bereits platziertes Tunnelausbausegment eines Tunnelausbaurings angeordnet wird,
   wobei wenigstens zwei Tunnelausbausegmentsensoren bereitgestellt werden, und wobei es sich bei dem Tunnelausbausegmentsensor um eine Time-of-Flight-Kamera handelt.

Eine weitere Lehre sieht vor, dass es sich bei dem wenigsten einen Werkzeug um ein Aufnahmeelement handelt. Hierdurch kann das jeweilige Segment einfach gegriffen und bewegt werden.

Vorteilhaft ist dabei, dass es sich bei dem wenigstens einen Werkzeugpositionssensor um eine Wegmesszylinder, Drehwinkelgeber, Lagesensor, Inklinometer und/oder Wegaufnehmer handelt. Weiterhin vorteilhaft ist, dass es sich bei den Daten um einen Verlegeplan der zu platzierenden Tunnelausbausegmente, einen Lieferplan der zu platzierenden Tunnelausbausegmente, eine Position eines Aufnahmeorts zur Aufnahme des jeweils zu platzierenden Tunnelausbausegments, eine Soll-Platzierungsposition des jeweils zu platzierenden Tunnelausbausegments, und/oder Informationen über die Art sowie physikalische Eigenschaften wie beispielsweise Gewicht und Dimensionen des jeweiligen zu platzierenden Tunnelausbausegments handelt. Hierdurch ist es auf einfache Weise möglich, dass die Steuerung alle relevanten Daten für die Ermittlung der notwendigen Ansteuerungen der Aktuatoren erhält, um das Tunnelausbausegment vom Aufnahmepunkt zur Ist-Platzierung zu bewegen.

Weiterhin ist vorteilhaft, dass ein Mensch-Maschine-Schnittstelle mit der Steuerung verbunden ist. Hierdurch lässt sich das automatische Verfahren auf einfache Weise um manuelle Steueranweisungen erweitern.

Weiterhin ist vorteilhaft, dass wenigstens ein zusätzlicher Tunnelausbausegmentsensor, bevorzugt als Time-of-Flight-Kamera oder 2D Kamera, vorgesehen wird. Die damit erfassten Signale werden dann bevorzugt beispielsweise von der Steuerung mittels Bildverarbeitung ausgewertet. Vorteilhaft ist dabei, dass der zusätzliche Tunnelausbausegmentsensor im Bereich der Tunnelausbausegmentsensoren oder im Bereich des Werkzeugs vorgesehen wird. Die damit erfassten Signale werden dann bevorzugt beispielsweise von der Steuerung mittels Bildverarbeitung ausgewertet. Weiterhin ist vorteilhaft, die Daten der zwei Tunnelausbausegmentsensoren mit den Daten des weiteren Tunnelausbausegmentsensors zu überlagern und/oder zu kombinieren. Hierdurch lassen sich beispielsweise beim Anfahren der Soll-Position auf einfache Weise Hindernisse erkennen. Weiterhin kann dadurch die Kantenerfassung der Tunnelausbausegmente und Spaltmessung zwischen den Tunnelausbausegmenten und zwischen den Tunnelausbausegmenten und der Wandung der Tunnelbohrung unterstützt werden, indem beispielsweise eine Sicherheitsredundanz bzw. schnellere Verarbeitung erreicht werden kann.

Eine weitere Lehre der Erfindung sieht vor, dass ein Sensor der Time-of-Flight-Kamera ein 2D Bild aufnimmt.

Eine weitere Lehre der Erfindung sieht vor, dass die Steuerung mit einer Steuerung der Tunnelbohrmaschine verbunden wird. Hierbei ist vorteilhaft, dass die Steuerung der Vorrichtung über die Steuerung der Tunnelbohrmaschine Funktionen der Tunnelbohrmaschine ansteuert. Hierdurch lassen sich auf einfache Weise Elemente der Tunnelbohrmaschine, die für den automatisierten Einbau der Tunnelausbausegmente betätigt werden müssen, automatisiert mit einer Steuerung ansteuern.

Eine weitere Lehre der Erfindung sieht vor, dass ein Zuführeinheit (Segmentfeeder) zum Zuführen des Tunnelausbausegments zu einem Aufnahmeort zur Aufnahme durch das Werkzeug von der Steuerung gesteuert wird, so dass das Tunnelausbausegment über die Steuerung bereitstellt wird. Hierdurch kann auf einfache Weise die Zuführung der Tunnelausbausegmente in Abhängigkeit der Platzierung derselben erreicht werden.

Eine weitere Lehre der Erfindung sieht vor, dass Vortriebspressen der Tunnelbohrmaschine von der Steuerung ein- und ausfahrbar angesteuert werden, so dass diese gegen platzierte Tunnelausbausegmente angepresst werden. Damit kann über die Steuerung auf einfache und sichere Weise ein Halten der Tunnelausbausegmente nach der Platzierung bewerkstelligt werden.

Eine weitere Lehre der Erfindung sieht vor, dass nachdem das letzte Tunnelausbausegment (Schlussstein) des Tunnelausbausegmentrings montiert wurde, der Manipulator mit wenigstens zwei Time-of-Flight-Kamera einen Abstand zwischen den Tunnelausbausegmenten des Tunnelausbausegmentrings und einer Bohrlochwand des Tunnelabschnitts vermisst, bevorzugt indem der Tunnelausbausegmentring wenigstens teilweise abgefahren wird. Hierdurch kann auf einfache Weise auch eine Vermessung der "Schildschwanzluft", dem Abstand zwischen der Außenseite der Tunnelausbausegmente und der Wandung der Tunnelbohrung durch Abfahren des Bereichs erreicht werden. Weiterhin kann ggf. eine Überwachung der Schildschwanzluft mittels weiterer Messgeräte, beispielsweise mittels Ultraschallsensoren entfallen.

Eine weitere Lehre der Erfindung sieht vor, dass nach dem Platzieren des Tunnelausbausegments an der Soll-Position das Werkzeug des Manipulators mit dem platzierten Tunnelausbausegment verbunden bleibt und beim Anpressen des Tunnelausbausegments mit wenigstens einer der Vortriebspressen der Tunnelbohrmaschine mitbewegt wird, und dass dabei die Bewegung des Werkzeugs erfasst wird. Hierdurch kann auf einfache Weise die finale Position des Tunnelausbausegments erfasst werden.

Nachfolgend wird die Erfindung anhand eines bevorzugten Ausführungsbeispiels in Verbindung mit einer Zeichnung näher erläutert. Dabei zeigen
Figur 1 eine räumliche Ansicht eines Erektors mit aufgenommenem Tunnelausbausegment,
Figur 2 eine schematische Darstellung der Platzierung eines Tunnelausbausegments,
Figur 3 eine schematische Ansicht einer erfindungsgemäßen Platzierung eines Tunnelausbausegments in Verbindung mit der erfindungsgemäßen Vorrichtung unter Verwendung des erfindungsgemäßen Verfahrens,
Figuren 4a bis 4e eine schematische Ansicht der Feinjustierungsschritte vor dem Platzieren des Tunnelausbausegments an der Soll-Position, und
Figuren 5a, 5b eine schematische Darstellung einer Aufnahme eine Tunnelausbausegments

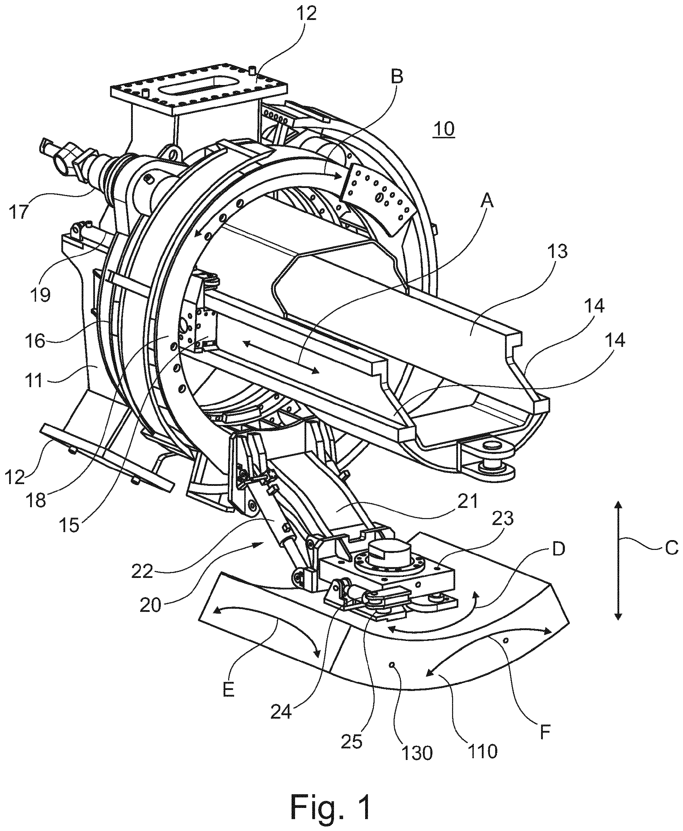

Figur 1 zeigt einen Erektor 10 als erfindungsgemäße Vorrichtung mit einem Grundträger 11 an dem Verbindungselemente 12 zur Verbindung mit einer Tunnelbohrmaschine (nicht dargestellt) angeordnet sind. Das Verbindungselement 12 ist hier flanschartig dargestellt.

An dem Grundträger 11 ist ein Manipulator 20 angeordnet, an dem beispielsweise wenigstens ein Fahrträger 13 vorgesehen ist, der hier beispielsweise beidseitig Gleitführungen 14 aufweist. In den Gleitführungen 14 verfahrbar sind beispielsweise Führungselemente 15 ebenfalls als Bestandteil des Manipulators 20 angeordnet. Die Führungselemente 15, an denen beispielsweise der Drehrahmen 16 ebenfalls als Bestandteil des Manipulators 20 angeordnet ist, sind über Zylinder 19 als Aktuatoren in Pfeilrichtung A verschiebbar.

An den Führungselementen 15 ist beispielsweise ein Drehrahmen 16 als Bestandteil des Manipulators 20 angeordnet. Der Drehrahmen 16 weist einen Rotationsantrieb 17 als Aktuator auf. An dem Drehrahmen 16 ist beispielsweise ein Drehring 18 als Bestandteil des Manipulators 20 drehbar angeordnet. Der Drehring 18 kann über den Rotationsantrieb 17 als Aktuator auf dem Drehrahmen 16 eine Rotationsbewegung durchführen. Der Drehring 18 ist in Pfeilrichtung B bewegbar.

An dem Drehring 18 ist ein Manipulatorarm 21 als Bestandteil des Manipulators 20 angeordnet. Er kann entsprechend mit dem Drehring 18 gedreht werden. Manipulatorarm 21 ist beispielsweise gegenüber dem Drehrahmen 16 schwenkbar. Dieses erfolgt beispielsweise über wenigstens einen Zylinder 22 als Aktuator. Am Manipulatorarm selber ist ein Erektorkopf 23 als Werkzeug vorgesehen. Dieser dient dazu, ein Tunnelausbausegment 110 aufzunehmen. Der Erektorkopf 23 wird hier beispielsweise durch das Betätigen der Zylinder 22 als Aktuator radial in Pfeilrichtung C bewegt.

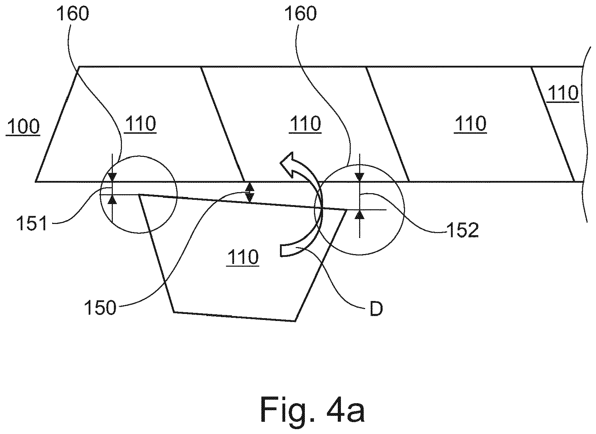

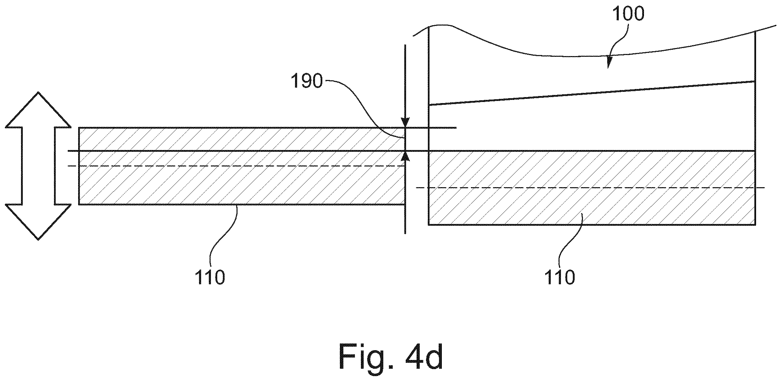

Zur Feinjustierung der Position der Tunnelausbausegmente 110, wie sie in Figuren 4a bis 4e dargestellt ist, weist der Erektorkopf 23 beispielsweise über den Zylinder 24 als Aktuator eine Rotationsmöglichkeit in Pfeilrichtung D auf. Weiterhin weist der Erektorkopf 23 beispielsweise Bewegungselemente 25 als Aktuatoren auf, durch die das Tunnelausbausegment 110 in Pfeilrichtung E gekippt bzw. in Pfeilrichtung F geschwenkt werden kann.

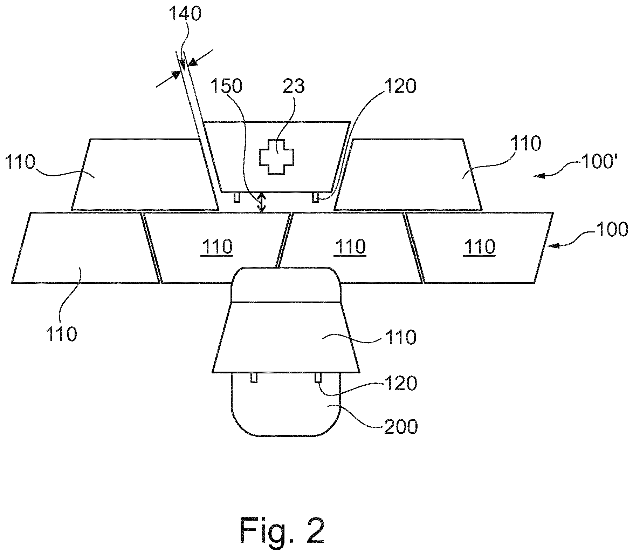

Das Tunnelausbausegment 110 wird an eine Aufnahmeposition 200 (siehe Figur 2) analog der in Figur 1 dargestellten Anordnung des Erektorkopfes 23 aufgenommen. Zur Aufnahmeposition 200 wird das Tunnelausbausegment 110 beispielsweise mit einem sogenannten Segmentfeeder (nicht dargestellt) transportiert. Durch eine Ansteuerung der Zylinder 19, 22, 24 sowie den Bewegungselementen 25 und dem Rotationsantrieb 17 durch eine Steuerung (nicht dargestellt) kann das Tunnelausbausegment 110 im durch die Tunnelbohrmaschine aufgefahrenen Tunnelabschnitt angeordnet werden durch Bewegen in die Pfeilrichtungen A bis F.

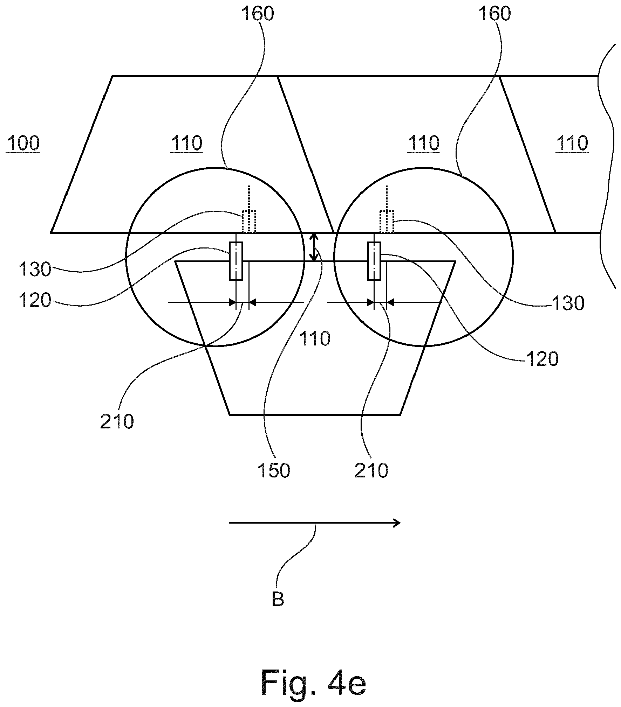

Die Steuerung bewirkt ein Bewegen des zu platzierenden Tunnelausbausegments 110 in den Bereich der Soll-Platzierung. Dieses ist beispielsweise in Figur 2 dargestellt. Der Erektorkopf 23, an dem sich das Tunnelausbausegment 110 befindet, wurde dabei über die Aktuatoren 17, 19, 22, 24, 25 von der Steuerung in eine entsprechende Position bewegt. In Figur 2 dargestellt ist ein abgeschlossener Ausbauring 100 der aus einzelnen bereits platzierten Tunnelausbausegmenten 110 besteht. Räumlich davor angeordnet ist ein weiterer Tunnelausbauring 100', der noch nicht abgeschlossen ist. In Figur 2 dargestellt ist das zu platzieren Tunnelausbausegment 110 mit einem Längsfugenabstand 140 an seinen kurzen Seiten und einem Ringfugenabstand 150 an seiner langen Seite. Vorgesehen sind Dübel 120 als Montagehilfe, die in Öffnungen 130 (siehe Figuren 1, 4e) einsetzbar sind.

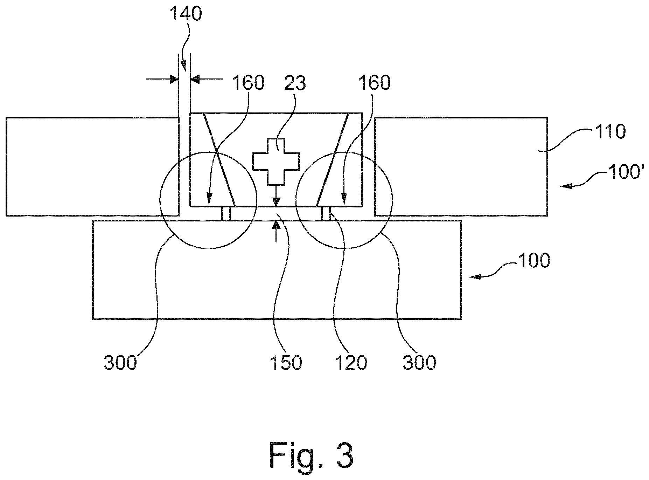

Um jetzt eine Anordnung der Ist-Platzierung des Tunnelausbausegments 110 in Verbindung mit den bereits platzierten Tunnelausbausegmenten 110 zu erreichen, werden die Eckbereiche 160 (siehe Figur 3) des zu verlegenen Tunnelausbausegments 110 jeweils mittels einer Time-of-Flight-Kamera (nicht dargestellt) als Tunnelausbausegmentsensoren (nicht dargestellt) und ggf. beispielsweise mit einer CCD-Kamera als 2D-Sensor als weiteren Tunnelausbausensor (nicht dargestellt) gescannt. Die Scanbereiche 300 sind in Figur 3 dargestellt. Hierdurch lassen sich die Längsfugenabstände 140 und Ringfugenabstände 150 sowie ein eventueller Neigungsfehler des zu verlegenen Tunnelausbausegments 110 in Bezug auf die bereits angeordneten Tunnelausbausegmente 110 erfassen. Basierend auf diesen erfassten Daten kann dann die Steuerung die Aktuatoren entsprechend ansteuern, um zum einen die Dübel 120 in die dafür vorgesehenen Öffnungen 130 einzuführen und gleichzeitig das zu verlegende Tunnelausbausegment 110 an seiner tatsächlichen Ist-Position zu platzieren. Gegebenenfalls werden die Daten der Tunnelausbausegmentsensoren kombiniert, zusammengefasst bzw. überlagert, um eine bessere Erkennung zu ermöglichen.

Das Ansteuern der Soll-Position erfolgt beispielsweise dadurch, dass über Messsensoren die einzelnen Bewegungen der Aktuatoren erfasst werden. Hierdurch kann die Steuerung genau bestimmen, an welcher Position sich das Werkzeug bzw. der Erektorkopf 23 im Raum gerade befindet. Basierend auf den bekannten übrigen Maßen und weiteren hier nicht dargestellten Führungshilfen beim Aufnehmen mittels des Erektorkopfes 23 ist somit indirekt auch die Position des zu platzierenden Tunnelausbausegments 110 bekannt. Hierüber kann die Steuerung das Tunnelausbausegment 110 in den Bereich einer Soll-Platzierungsstelle bewegen. Gegebenenfalls findet dabei beispielsweise über den zusätzlichen Tunnelausbausegmentsensor auch noch eine aktive Hinderniserkennung statt. Erst ab diesem Zeitpunkt ist es dann sinnvoll, die Eckbereiche 160 mittels 3D Erfassung durch Time-of-Flight-Kameras zu überwachen, indem die Scanbereiche 300 überwacht werden und die tatsächlichen Längsfugenabstände 140 und Ringfugenabstände 150 sowie eventuelle Neigungsfehler direkt ermittelt werden. Die Form der Scanbereiche 300 ist hier nur beispielhaft dargestellt. Beispielsweise ist auch eine Rechteckform möglich. Darauf basierend wird dann das Tunnelausbausegment 110 an der tatsächlichen Ist-Position als Absetzposition platziert. Über nicht dargestellte Vortriebspressen wird dann das Tunnelausbausegment 110 an die finale Position im Tunnelausbauring gedrückt. Dabei verbleibt das Werkzeug 23 bevorzugt noch auf dem platzierten Tunnelausbausegment und wird von den Vortriebspressen beim Bewegen des Tunnelausbausegments in die finale Position mitbewegt. Diese Bewegung wird bevorzugt erfasst, so dass die finale Position dokumentierbar ist.

Die Feinjustierung der Ist-Position und Ist-Lage des Tunnelausbausegments 110 hin zur notwendigen Soll-Lage und Soll-Position, insbesondere relativ zur Ist Position und Ist-Lage der bereits montierten Tunnelausbausegmente 110 ist in den Figuren 4a bis 4e gezeigt. Für die Feinjustierung werden die Bereiche 160 hinsichtlich der entsprechenden Ausgleichswerte überwacht. Dabei werden jeweils die Positionen der Kanten und Flächen zueinander erfasst und abgeglichen um die jeweils notwendigen Justierungsbewegungen zur Feinjustierung zu ermitteln.

Figur 4a zeigt dabei das Drehen des Tunnelausbausegments 110 in Pfeilrichtung D um gleichmäßige Ringfugenabstände 150 zu erreichen. Dargestellt ist ein kleinerer Ringfugenabstand 151 im linken Eckbereich 160 im Vergleich zum größeren Ringfugenabstand 152 im rechten Eckbereich 160, die durch Drehen des Werkzeugs 23 in Pfeilrichtung D zum erforderlichen Ringfugenabstand 150 angeglichen werden, um eine Parallelität der Kanten der Tunnelausbausegmente 110 zu erreichen.

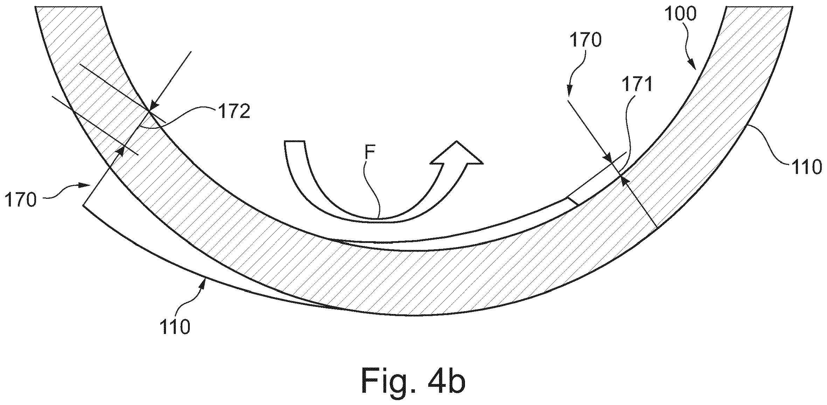

In Figur 4b wird das Werkzeug 23 in Pfeilrichtung F gedreht, um die radialen Distanzen 170 auf null zu bringen, die hier unterschiedlich groß als radiale Distanz 171, 172 dargestellt sind. Nur Wenn die radiale Distanz 170 optimaler Weise null beträgt, kann das Tunnelausbausegment 110 korrekt platziert werden.

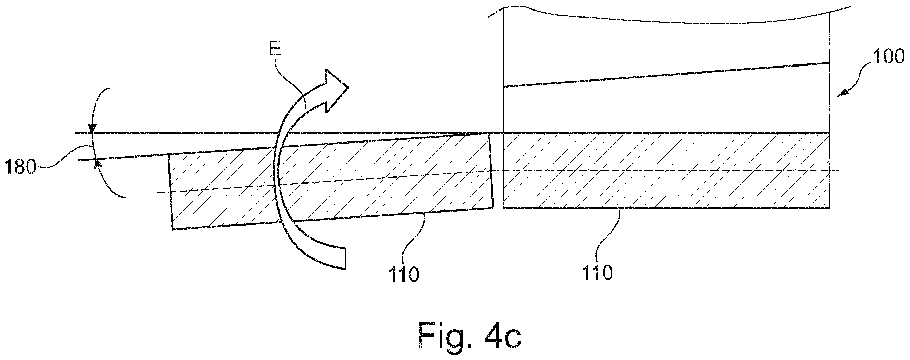

In Figur 4c ist ein Winkelversatz 180 gezeigt, der für eine korrekte Platzierung ebenfalls null sein sollte. Der Winkelversatz 180 wird durch kippen des Werkzeugs 23 in Pfeilrichtung E auf null gesetzt.

Weiterhin ist es notwendig, dass die Kanten der Tunnelausbausegmente 110 dieselbe Höheaufweisen und kein Höhenversatz 190 besteht. Hierfür wird das Werkzeug 23 in Pfeilrichtung B bewegt.

Weiterhin ist es notwendig analog Figur 4e eine Ausrichtung der Dübel 120 und der Dübellöcher 130 zu bewirken, wenn Dübel 120 zur Platzierung eingesetzt werden. Hierbei werden mittels der Tunnelausbausegmentsensoren die Dübel 120 und die Löcher 130 an den jeweiligen Tunnelausbausegmenten erfasst. Der Abstand 210 muss dann ebenfalls null betragen, damit die Tunnelausbausegmente 110 korrekt platziert werden können. Diese wird durch eine Rotation des Werkzeugs 23 in Pfeilrichtung B bewirkt.

Nach der finalen Platzierung des letzten Tunnelausbausegments 110 eines Tunnelausbaurings 100 kann der Abstand des Tunnelausbaurings 100 zur Wandung der Tunnelbohrung vermessen werden, um die Schildschwanzluft zu bestimmen. Hierfür fährt der Manipulator 20 mit dem Werkzeug 23 und den daran befindlichen Tunnelausbausegmentsensoren den Spalt (nicht dargestellt) ab und erfasst ihn. Dabei können beispielsweise auf Beschädigungen an den Tunnelausbausegmenten 110 erfasst werden.

Weiterhin kann mit den Tunnelausbausegmentsensoren der final platzierte Tunnelausbauring 100 abgefahren werden, um die finalen Positionen der einzelnen Tunnelausbausegmente 110 des Tunnelausbaurings 100 zu erfassen. Hierbei werden beispielsweise die Kanten der Tunnelausbausegmente, die Verläufe der Kanten der Tunnelausbausegmente 110 zueinander erfasst werden. Dabei können beispielsweise auf Beschädigungen an den Tunnelausbausegmenten 110 erfasst werden.

Die Überwachung, Vermessung und die Platzierung des Tunnelausbausegment 110 bzw. dessen Bewegung im Raum kann durch eine 2D Überwachung beispielsweise mittels Kameras (nicht dargestellt) oder durch einen Sensor der Time-of-Flight-Kamera und einer Auswertung der dabei gewonnen Daten unterstützt werden, in dem die dabei gewonnen 2D-Bilddaten mit dem 3D-Bilddaten kombiniert werden.

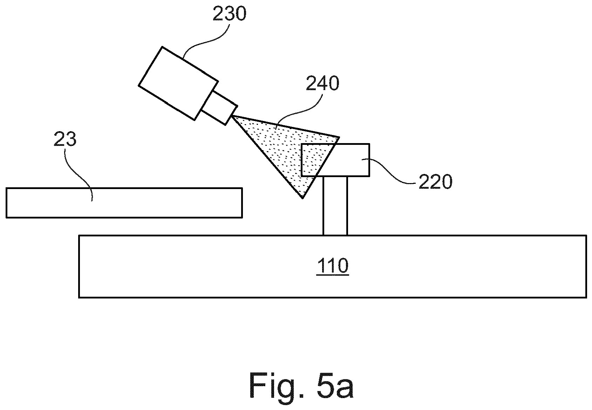

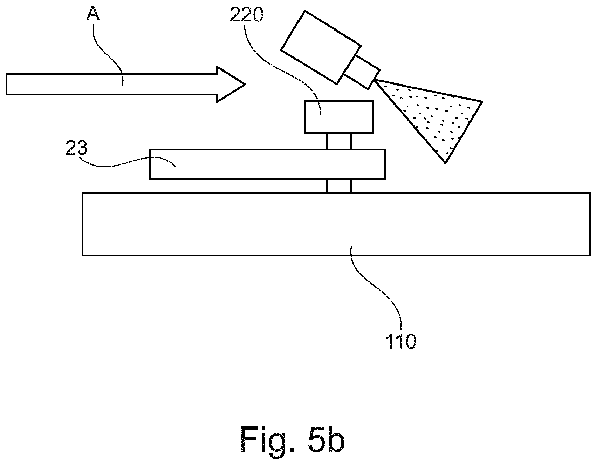

In den Figuren 5a, 5b ist beispielhaft eine Aufnahme eines Tunnelausbausegments 110 durch das Werkzeug 23 dargestellt. Zur Aufnahme wird hier ein Pin 220 eingesetzt, der beispielsweise mittig mit dem Tunnelausbausegment 110 verbunden ist. Das Werkzeug wird zur Aufnahme in Pfeilrichtung A bewegt, um dann den Pin 220 greifen zu können und damit eine Verbindung zwischen Werkzeug und Tunnelausbausegment 110 bereitzustellen, damit das Tunnelausbausegment 110 von der Aufnahmeposition 200 zu Soll-Platzierungsposition bewegt werden kann.

Um den Pin erfassen zu können, ist hier bevorzugt ein weiterer Tunnelausbausegmentsensor 230 vorgesehen, der am Werkzeug 23 angeordnet ist. Dieser weist einen Erfassungsbereich 240 auf, der vor dem Werkzeug liegt, um den Pin 230 optimal rechtzeitig erkennen zu können. Ist dieses erfolgt, wird die Lage des Werkzeugs durch die 17, 19, 22, 24, 25 von der Steuerung so ausgerichtet, dass das Werkzeug bevorzugt in Pfei9lrichtung A in den Pin 220 hineinfahren kann.

Der weitere Tunnelausbausegmentsensor 230 ist bevorzugt eine Time-of-Flight-Kamera. Diese kann bevorzugt sowohl 3D-Bilder als auch 2D Bilder bereitstellen.

## Patentansprüche

1. Vorrichtung (10) zum automatisierten Einbau wenigstens eines Tunnelausbausegments (110) eines Tunnelausbaurings zum Ausbauen eines von einer Tunnelbohrmaschine aufgefahrenen Tunnelabschnitts, die mit der Tunnelbohrmaschine koppelbar ist,
• mit einem Manipulator (20) mit wenigstens einem Werkzeug (23) zum Aufnehmen, Halten und Platzieren des wenigstens einen Tunnelausbausegments, und mit wenigstens einem Aktuator (17, 22, 24) zum Bewegen des wenigstens einen Werkzeugs, wobei das wenigstens eine Werkzeug mittels des wenigstens einen Aktuators in radialer, tangentialer und/oder axialer Richtung in Bezug auf die Maschinenachse der Tunnelbohrmaschine im Raum des durch die Tunnelbohrmaschine errichteten Tunnelabschnitts verfahrbar ist,
• mit wenigstens einem Werkzeugpositionssensor, der am Manipulator und/oder Werkzeug vorgesehen ist, zur Erfassung der jeweiligen Ist-Position und Ist-Lage des Werkzeugs im Raum des Tunnelabschnitts,
• mit wenigstens einem Tunnelausbausegmentsensor (230), der am Manipulator und/oder Werkzeug vorgesehen ist, mit dem eine Ist-Position und/oder Ist- Lage wenigstens eines Abschnitts wenigstens eines bereits angeordneten Tunnelausbausegments erfassbar ist, und/oder mit dem eine Ist-Position und/oder Ist-Lage des jeweils zu platzierenden Tunnelausbausegments erfassbar ist,
• mit wenigstens einer Steuerung, die auf Einbaudaten der Tunnelausbausegmente zugreift, und die auf die Messdaten des wenigstens einen Werkzeugpositionssensors und des wenigstens einem Tunnelausbausegmentsensor zugreift, und mit der basierend auf den Einbaudaten und Messdaten der wenigstens eine Aktuator und das wenigstens eine Werkzeug steuerbar sind, um das Werkzeug von der Aufnahmeposition zur Soll-Platzierungsposition des jeweiligen Tunnelausbausegments zu bewegen, dieses in die Ist-Platzierungsposition auszurichten und das Tunnelausbausegment gegen wenigstens ein bereits platziertes Tunnelausbausegment eines Tunnelausbaurings anzuordnen,
wobei wenigstens zwei Tunnelausbausegmentsensoren vorgesehen sind, **dadurch gekennzeichnet, dass** es sich bei dem Tunnelausbausegmentsensor um eine Time-of-Flight-Kamera handelt.

2. Vorrichtung nach Anspruch 1, **dadurch gekennzeichnet, dass** es sich bei dem wenigstens einen Werkzeug um ein Aufnahmeelement handelt.

3. Vorrichtung nach Anspruch 1 oder 2, **dadurch gekennzeichnet, dass** es sich bei dem wenigstens einen Werkzeugpositionssensor um eine Wegmesszylinder, Drehwinkelgeber, Lagesensor, Inklinometer und/oder Wegaufnehmer handelt.

4. Vorrichtung nach einem der Ansprüche 1 bis 3, **dadurch gekennzeichnet, dass** es sich bei den Daten um einen Verlegeplan der zu platzierenden Tunnelausbausegmente, einen Lieferplan der zu platzierenden Tunnelausbausegmente, eine Position eines Aufnahmeorts zur Aufnahme des jeweils zu platzierenden Tunnelausbausegments, eine Soll-Platzierungsposition des jeweils zu platzierenden Tunnelausbausegments, und/oder Informationen über die Art sowie physikalische Eigenschaften wie beispielsweise Gewicht und Dimensionen des jeweiligen zu platzierenden Tunnelausbausegments handelt.

5. Vorrichtung nach einem der Ansprüche 1 bis 4, **dadurch gekennzeichnet, dass** wenigstens ein zusätzlicher Tunnelausbausegmentsensor, bevorzugt als Time-of-Flight-Kamera oder 2D Kamera, vorgesehen ist.

6. Vorrichtung nach Anspruch 5, **dadurch gekennzeichnet, dass** der zusätzliche Tunnelausbausegmentsensor im Bereich der Tunnelausbausegmentsensoren oder im Bereich des Werkzeugs vorgesehen ist.

7. Vorrichtung nach einem der Ansprüche 1 bis 6, **dadurch gekennzeichnet, dass** Vortriebspressen der Tunnelbohrmaschine von der Steuerung ein- und ausfahrbar ansteuerbar sind, so dass diese gegen platzierte Tunnelausbausegmente anpressbar sind.

8. Vorrichtung nach einem der Ansprüche 1 bis 7, **dadurch gekennzeichnet, dass** ein Zuführeinheit (Segmentfeeder) zum Zuführen des Tunnelausbausegments zu einem Aufnahmeort zur Aufnahme durch das Werkzeug von der Steuerung ansteuerbar, so dass das Tunnelausbausegment über die Steuerung bereitstellbar ist.

9. Vorrichtung nach einem der Ansprüche 1 bis 8, **dadurch gekennzeichnet, dass** ein Sensor der Time-of-Flight-Kamera ein 2D Bild aufnimmt.

10. Verfahren zum automatisierten Einbau wenigstens eines Tunnelausbausegments (110) eines Tunnelausbaurings zum Ausbauen eines von einer Tunnelbohrmaschine aufgefahrenen Tunnelabschnitts mit einer Vorrichtung (10) nach einem der Ansprüche 1 bis 9 an der ein mit wenigstens einem Werkzeug (23) zum Aufnehmen, Halten und Platzieren des wenigstens einen Tunnelausbausegments bestückter Manipulator (20) vorgesehen ist, und die in einer Tunnelbohrmaschine vorgesehen ist,
• wobei das wenigstens eine Werkzeug mit wenigstens einem Aktuator (17, 22, 24) in radialer, tangentialer und/oder axialer Richtung in Bezug auf die Maschinenachse der Tunnelbohrmaschine im Raum des durch die Tunnelbohrmaschine errichteten Tunnelabschnitts bewegt wird,
• wobei mit wenigstens einem Werkzeugpositionssensor, der am Manipulator und/oder Werkzeug vorgesehen ist, eine Ist-Position und Ist-Lage des Werkzeugs im Raum des Tunnelabschnitts erfasst wird,
• wobei mit wenigstens einem Tunnelausbausegmentsensor (230), der am Manipulator und/oder Werkzeug vorgesehen ist, eine Ist-Position und/oder Ist- Lage wenigstens eines Abschnitts wenigstens eines bereits angeordneten Tunnelausbausegments erfasst wird, und/oder wobei mit dem wenigstens einen Tunnelausbausegmentsensor eine Ist-Position und/oder Ist-Lage des jeweils zu platzierenden Tunnelausbausegments erfasst wird,
• wobei wenigstens eine Steuerung bereitgestellt wird, die auf Einbaudaten der Tunnelausbausegmente sowie auf die Messdaten des wenigstens einen Werkzeugpositionssensors und des wenigstens einem Tunnelausbausegmentsensor zugreift,
• wobei die wenigstens eine Steuerung basierend auf den Einbaudaten und Messdaten den wenigstens einen Aktuator und das wenigstens eine Werkzeug steuert, so dass das Werkzeug mit dem Tunnelausbausegment von dessen jeweiligen Aufnahmeposition zu dessen jeweiligen Soll-Platzierungsposition bewegt wird und das Tunnelausbausegment basierend auf den Messdaten des Tunnelausbausegmentsensors in die Ist-Platzierungsposition ausgerichtet und gegen wenigstens ein bereits platziertes Tunnelausbausegment eines Tunnelausbaurings angeordnet wird,
wobei wenigstens zwei Tunnelausbausegmentsensoren bereitgestellt werden, **dadurch gekennzeichnet, dass** es sich bei dem Tunnelausbausegmentsensor um eine Time-of-Flight-Kamera handelt.

11. Verfahren nach Anspruch 10, **dadurch gekennzeichnet, dass** es sich bei dem wenigsten einen Werkzeug um ein Aufnahmeelement handelt.

12. Verfahren nach Anspruch 10 oder 11, **dadurch gekennzeichnet, dass** es sich bei dem wenigstens einen Werkzeugpositionssensor um eine Wegmesszylinder, Drehwinkelgeber, Lagesensor, Inklinometer und/oder Wegaufnehmer handelt.

13. Verfahren nach einem der Ansprüche 10 bis 12, **dadurch gekennzeichnet, dass** es sich bei den Daten um einen Verlegeplan der zu platzierenden Tunnelausbausegmente, einen Lieferplan der zu platzierenden Tunnelausbausegmente, eine Position eines Aufnahmeorts zur Aufnahme des jeweils zu platzierenden Tunnelausbausegments, eine Soll-Platzierungsposition des jeweils zu platzierenden Tunnelausbausegments, und/oder Informationen über die Art sowie physikalische Eigenschaften wie beispielsweise Gewicht und Dimensionen des jeweiligen zu platzierenden Tunnelausbausegments handelt.

14. Verfahren nach einem der Ansprüche 10 bis 13, **dadurch gekennzeichnet, dass** wenigstens ein zusätzlicher Tunnelausbausegmentsensor, bevorzugt als Time-of-Flight-Kamera oder 2D Kamera vorgesehen wird.

15. Verfahren nach Anspruch 14, **dadurch gekennzeichnet, dass** der zusätzliche Tunnelausbausegmentsensor im Bereich der Tunnelausbausegmentsensoren oder im Bereich des Werkzeugs vorgesehen wird.

16. Verfahren nach einem der Ansprüche 10 bis 15, **dadurch gekennzeichnet, dass** ein Sensor der Time-of-Flight-Kamera ein 2D Bild aufnimmt.

17. Verfahren nach einem der Ansprüche 14 bis 16, **dadurch gekennzeichnet, dass** die Daten der zwei Tunnelausbausegmentsensoren mit den Daten des zusätzlichen Tunnelausbausegmentsensors kombiniert werden.

18. Verfahren nach einem der Ansprüche 10 bis 17, **dadurch gekennzeichnet, dass** ein Zuführeinheit (Segmentfeeder) zum Zuführen des Tunnelausbausegments zu einem Aufnahmeort zur Aufnahme durch das Werkzeug von der Steuerung gesteuert wird, so dass das Tunnelausbausegment über die Steuerung bereitstellt wird.

19. Verfahren nach einem der Ansprüche 10 bis 18, **dadurch gekennzeichnet, dass** Vortriebspressen der Tunnelbohrmaschine von der Steuerung ein- und ausfahrbar angesteuert werden, so dass diese gegen platzierte Tunnelausbausegmente angepresst werden.

20. Verfahren nach einem der Ansprüche 10 bis 19, **dadurch gekennzeichnet, dass** nachdem das letzte Tunnelausbausegment (Schlussstein) des Tunnelausbausegmentrings montiert wurde, der Manipulator mit wenigstens zwei Time-of-Flight-Kamera einen Abstand zwischen den Tunnelausbausegmenten des Tunnelausbausegmentrings und einer Bohrlochwand des Tunnelabschnitts vermisst, bevorzugt indem der Tunnelausbausegmentring wenigstens teilweise abgefahren wird.

21. Verfahren nach einem der Ansprüche 10 bis 20, **dadurch gekennzeichnet, dass** nach dem Platzieren des Tunnelausbausegments an der Soll-Position das Werkzeug des Manipulators mit dem platzierten Tunnelausbausegment verbunden bleibt und beim Anpressen des Tunnelausbausegments mit wenigstens einer der Vortriebspressen der Tunnelbohrmaschine mitbewegt wird, und dass dabei die Bewegung des Werkzeugs erfasst wird.

## Claims

1. Device (10) for the automated installation of at least one tunnel lining segment (110) of a tunnel lining ring for lining a tunnel section driven by a tunnelling machine, which device can be coupled to a tunnelling machine,
• having a manipulator (20) with at least one tool (23) for picking up, holding and placing the at least one tunnel lining segment, and with at least one actuator (17, 22, 24) for moving the at least one tool, wherein the at least one tool can be moved by means of the at least one actuator in a radial, tangential and/or axial direction with respect to the machine axis of the tunnelling machine in the space of the tunnel section created by the tunnelling machine,
• having at least one tool position sensor, which is provided on the manipulator and/or tool, for sensing the respective actual position and actual location of the tool in the space of the tunnel section,
• having at least one tunnel lining segment sensor (230), which is provided on the manipulator and/or tool, with which an actual position and/or actual location of at least one section of at least one already arranged tunnel lining segment can be sensed, and/or with which an actual position and/or actual location of the tunnel lining segment respectively to be placed can be sensed,
• having at least one controller, which accesses installation data of the tunnel lining segments and which accesses the measurement data of the at least one tool position sensor and the at least one tunnel lining segment sensor, and with which the at least one actuator and the at least one tool can be controlled on the basis of the installation data and measurement data in order to move the tool from the picking-up position to the target placing position of the respective tunnel lining segment, to align it in the actual placing position and to arrange the tunnel lining segment against at least one already placed tunnel lining segment of a tunnel lining ring, wherein at least two tunnel lining segment sensors are provided, **characterized in that** the tunnel lining segment sensor is a time-of-flight camera.

2. Device according to Claim 1, **characterized in that** the at least one tool is a picking-up element.

3. Device according to Claim 1 or 2, **characterized in that** the at least one tool position sensor is a displacement measuring cylinder, rotary encoder, location sensor, inclinometer and/or displacement transducer.

4. Device according to one of Claims 1 to 3, **characterized in that** the data are a laying plan of the tunnel lining segments to be placed, a delivery plan of the tunnel lining segments to be placed, a position of the picking-up location for picking up the tunnel lining segment respectively to be placed, a target placing position of the tunnel lining segment respectively to be placed, and/or information about the type and physical properties, such as for example the weight and dimensions, of the respective tunnel lining segment to be placed.

5. Device according to one of Claims 1 to 4, **characterized in that** at least one additional tunnel lining segment sensor is provided, preferably as a time-of-flight camera or 2D camera.

6. Device according to Claim 5, **characterized in that** the additional tunnel lining segment sensor is provided in the region of the tunnel lining segment sensors or in the region of the tool.

7. Device according to one of Claims 1 to 6, **characterized in that** advancing presses of the tunnelling machine can be activated extendably and retractably by the controller, so that they can be pressed against placed tunnel lining segments.

8. Device according to one of Claims 1 to 7, **characterized in that** a feeding unit (segment feeder) for feeding the tunnel lining segment to a picking-up location for being picked up by the tool can be activated by the controller, so that the tunnel lining segment can be made ready by way of the controller.

9. Device according to one of Claims 1 to 8, **characterized in that** a sensor of the time-of-flight camera records a 2D image.

10. Method for the automated installation of at least one tunnel lining segment (110) of a tunnel lining ring for lining a tunnel section driven by a tunnelling machine with a device (10) according to one of Claims 1 to 9 on which a manipulator (20) fitted with at least one tool (23) for picking up, holding and placing the at least one tunnel lining segment is provided, and which is provided in a tunnelling machine,
wherein the at least one tool is moved by at least one actuator (17, 22, 24) in a radial, tangential and/or axial direction with respect to the machine axis of the tunnelling machine in the space of the tunnel section created by the tunnelling machine,
wherein an actual position and actual location of the tool in the space of the tunnel section is sensed by at least one tool position sensor, which is provided on the manipulator and/or tool,
wherein an actual position and/or actual location of at least one section of at least one already arranged tunnel lining segment is sensed by at least one tunnel lining segment sensor (230), which is provided on the manipulator and/or tool, and/or
wherein an actual position and/or actual location of the tunnel lining segment respectively to be placed is sensed by at least one tunnel lining segment sensor,
wherein at least one controller, which accesses installation data of the tunnel lining segments and the measurement data of the at least one tool position sensor, is provided,
wherein the at least one controller controls the at least one actuator and the at least one tool on the basis of the installation data and measurement data, so that the tool with the tunnel lining segment is moved from its respective picking-up position to its respective target placing position and the tunnel lining segment is aligned in the actual placing position and arranged against at least one already placed tunnel lining segment of a tunnel lining ring, wherein at least two tunnel lining segment sensors are provided, **characterized in that** the tunnel lining segment sensor is a time-of-flight camera.

11. Method according to Claim 10, **characterized in that** the at least one tool is a picking-up element.

12. Method according to Claim 10 or 11, **characterized in that** the at least one tool position sensor is a displacement measuring cylinder, rotary encoder, location sensor, inclinometer and/or displacement transducer.

13. Method according to one of Claims 10 to 12, **characterized in that** the data are a laying plan of the tunnel lining segments to be placed, a delivery plan of the tunnel lining segments to be placed, a position of the picking-up location for picking up the tunnel lining segment respectively to be placed, a target placing position of the tunnel lining segment respectively to be placed, and/or information about the type and physical properties, such as for example the weight and dimensions, of the respective tunnel lining segment to be placed.

14. Method according to one of Claims 10 to 13, **characterized in that** at least one additional tunnel lining segment sensor is provided, preferably as a time-of-flight camera or 2D camera.

15. Method according to Claim 14, **characterized in that** the additional tunnel lining segment sensor is provided in the region of the tunnel lining segment sensors or in the region of the tool.

16. Method according to one of Claims 10 to 15, **characterized in that** a sensor of the time-of-flight camera records a 2D image.

17. Method according to one of Claims 14 to 16, **characterized in that** the data of the two tunnel lining segment sensors are combined with the data of the additional tunnel lining segment sensor.

18. Method according to one of Claims 10 to 17, **characterized in that** a feeding unit (segment feeder) for feeding the tunnel lining segment to a picking-up location for being picked up by the tool is controlled by the controller, so that the tunnel lining segment is made ready by way of the controller.

19. Method according to one of Claims 10 to 18, **characterized in that** advancing presses of the tunnelling machine are activated extendably and retractably by the controller, so that they are pressed against placed tunnel lining segments.

20. Method according to one of Claims 10 to 19, **characterized in that**, once the last tunnel lining segment (keystone) of the tunnel lining segment ring has been fitted, the manipulator measures with at least two time-of-flight cameras a distance between the tunnel lining segments of the tunnel lining segment ring and a borehole wall of the tunnel section, preferably **in that** the tunnel lining segment ring is at least partially travelled along.

21. Method according to one of Claims 10 to 20, **characterized in that**, after the placing of the tunnel lining segment at the target position, the tool of the manipulator remains connected to the placed tunnel lining segment and, when the tunnel lining segment is being pressed by the advancing presses of the tunneling machine, is moved along with it, and **in that** during this the movement of the tool is sensed.

## Revendications

1. Dispositif (10) d'encastrement automatisé d'au moins un segment de soutènement de tunnel (110) d'une bague de soutènement de tunnel pour le soutènement d'une section de tunnel parcourue par une machine de percement de tunnel et pouvant être couplée à l'aide de la machine de percement de tunnel ;
- avec un manipulateur (20) doté d'au moins un outil (23) pour charger, maintenir et placer l'au moins un segment de soutènement de tunnel et avec au moins un actionneur (17, 22, 24) pour déplacer l'au moins un outil, l'au moins un outil pouvant être déplacé à l'aide de l'au moins un actionneur dans la direction radiale, tangentielle et/ou axiale par rapport à l'axe de la machine de percement de tunnel dans l'espace de la section de tunnel réalisée par la machine de percement de tunnel ;
- avec au moins un capteur de position d'outil prévu au niveau du manipulateur et/ou de l'outil pour détecter la position réelle respective et l'emplacement réel de l'outil dans l'espace de la section de tunnel ;
- avec au moins un capteur de segment de soutènement de tunnel (230) prévu au niveau du manipulateur et/ou de l'outil avec lequel une position réelle et/ou un emplacement réel d'au moins une section d'au moins un segment de soutènement de tunnel déjà réalisé peut être déterminé et/ou avec lequel une position réelle et/ou un emplacement réel du segment de soutènement de tunnel à placer respectivement peut être déterminé ;
- avec au moins une commande qui accède aux données d'encastrement des segments de soutènement de tunnel et qui accède aux données de mesure de l'au moins un capteur de position d'outil et de l'au moins un capteur de segment de soutènement de tunnel et avec lequel, sur la base des données d'encastrement et des données de mesure, l'au moins un actionneur et l'au moins un outil peuvent être commandés, pour déplacer l'outil de la position de chargement jusqu'à la position de placement théorique du segment de soutènement de tunnel respectif, pour l'orienter dans la position de placement réelle et pour agencer le segment de soutènement de tunnel contre au moins un segment de soutènement de tunnel déjà réalisé d'une bague de soutènement de tunnel ;
au moins deux capteurs de segment de soutènement de tunnel étant prévus ;
**caractérisé en ce que** le capteur de segment de soutènement de tunnel est une caméra de temps de vol (Time-of-Flight Camera en anglais).

2. Dispositif selon la revendication 1, **caractérisé en ce que** l'au moins un outil est un élément de chargement.

3. Dispositif selon la revendication 1 ou 2, **caractérisé en ce que** l'au moins un capteur de position d'outil est un cylindre de mesure de course, un capteur d'angle de rotation, un capteur de position, un inclinomètre et/ou un détecteur de course.

4. Dispositif selon l'une quelconque des revendications 1 à 3, **caractérisé en ce que** les données sont un plan de pose des segments de soutènement de tunnel à placer, un plan de livraison des segments de soutènement de tunnel à placer, une position d'un lieu de chargement pour le chargement du segment de soutènement de tunnel à placer respectivement, une position de placement théorique du segment de soutènement de tunnel à placer respectivement et/ou des informations sur le type ainsi que les propriétés physiques telles que le poids et les dimensions du segment de soutènement de tunnel respectif à placer.

5. Dispositif selon l'une quelconque des revendications 1 à 4, **caractérisé en ce qu'**au moins un capteur de segment de soutènement de tunnel supplémentaire est prévu, de façon préférée sous la forme d'une caméra de temps de vol ou d'une caméra 2D.

6. Dispositif selon la revendication 5, **caractérisé en ce que** le capteur de segment de soutènement de tunnel supplémentaire est prévu dans la région des capteurs de segment de soutènement de tunnel ou dans la région de l'outil.

7. Dispositif selon l'une quelconque des revendications 1 à 6, **caractérisé en ce que** des presses de poussée de la machine de percement de tunnel peuvent être commandées de façon à être rentrées et sorties par la commande, de sorte que celles-ci soient comprimées contre les segments de soutènement de tunnel placés.

8. Dispositif selon l'une quelconque des revendications 1 à 7, **caractérisé en ce qu'**une unité d'amenée (segment feeder en anglais) peut être commandée pour amener le segment de soutènement de tunnel jusqu'à un lieu de chargement de façon à permettre un chargement par l'outil de la commande, de sorte que le segment de soutènement de tunnel puisse être mis à disposition via la commande.

9. Dispositif selon l'une quelconque des revendications 1 à 8, **caractérisé en ce qu'**un capteur de la caméra de temps de vol prend une image 2D.

10. Procédé d'encastrement automatisé d'au moins un segment de soutènement de tunnel (110) d'une bague de soutènement de tunnel pour le soutènement d'une section de tunnel parcourue par une machine de percement de tunnel avec un dispositif (10) selon l'une quelconque des revendications 1 à 9 au niveau duquel un manipulateur (20) comportant au moins un outil (23) pour charger, maintenir et placer l'au moins un segment de soutènement de tunnel est prévu, dans une machine de percement de tunnel ;
- l'au moins un outil doté d'au moins un actionneur (17, 22, 24) dans la direction radiale, tangentielle et/ou axiale par rapport à l'axe de la machine de percement de tunnel étant déplacé dans l'espace de la section de tunnel réalisée par la machine de percement de tunnel ;
- une position réelle et un emplacement réel de l'outil étant détecté dans l'espace de la section de tunnel avec au moins un capteur de position d'outil prévu au niveau du manipulateur et/ou de l'outil ;
- une position réelle et/ou un emplacement réel d'au moins une section d'au moins un segment de soutènement de tunnel déjà réalisée est détecté avec au moins un capteur de segment de soutènement de tunnel (230) prévu au niveau du manipulateur et/ou de l'outil et/ou une position réelle et/ou un emplacement réel du segment de soutènement de tunnel à réaliser respectivement est détecté avec l'au moins un capteur de segment de soutènement de tunnel ;
- au moins une commande étant mise à disposition, celle-ci accédant aux données d'encastrement des segments de soutènement de tunnel ainsi qu'aux données de mesure de l'au moins un capteur de position d'outil et de l'au moins un capteur de segment de soutènement de tunnel ;
- l'au moins une commande commandant l'au moins un actionneur et l'au moins un outil sur la base des données d'encastrement et des données de mesure, de sorte que l'outil soit déplacé avec le segment de soutènement de tunnel depuis sa position de chargement respective jusqu'à sa position de placement théorique respective et le segment de soutènement de tunnel étant orienté jusque dans la position de placement réelle sur la base des données de mesure du capteur de segment de soutènement de tunnel et étant disposé contre au moins un segment de soutènement de tunnel placé d'une bague de soutènement de tunnel ;
au moins deux capteurs de segment de soutènement de tunnel étant mis à disposition, **caractérisé en ce que** le capteur de segment de soutènement de tunnel est une caméra de temps de vol.

11. Procédé selon la revendication 10, **caractérisé en ce que** l'au moins un outil est un élément de chargement.

12. Procédé selon la revendication 10 ou 11, **caractérisé en ce que** l'au moins un capteur de position d'outil est un cylindre de mesure de course, un capteur d'angle de rotation, un capteur de position, un inclinomètre et/ou un détecteur de course.

13. Procédé selon l'une quelconque des revendications 10 à 12, **caractérisé en ce que** les données sont un plan de pose des segments de soutènement de tunnel à placer, un plan de livraison des segments de soutènement de tunnel à placer, une position d'un lieu de chargement pour charger le segment de soutènement de tunnel à réaliser respectivement, une position de placement théorique du segment de soutènement de tunnel à réaliser respectivement et/ou des informations sur le type ainsi que les propriétés physiques telles que le poids et les dimensions du segment de soutènement de tunnel respectif à placer.

14. Procédé selon l'une quelconque des revendications 10 à 13, **caractérisé en ce qu'**au moins un capteur de segment de soutènement de tunnel supplémentaire est prévu, de façon préférée sous la forme d'une caméra de temps de vol ou d'une caméra 2D.

15. Procédé selon la revendication 14, **caractérisé en ce que** le capteur de segment de soutènement de tunnel supplémentaire est prévu dans la région des capteurs de segment de soutènement de tunnel ou dans la région de l'outil.

16. Procédé selon l'une quelconque des revendications 10 à 15, **caractérisé en ce qu'**un capteur de caméra de temps de vol prend une image 2D.

17. Procédé selon l'une quelconque des revendications 14 à 16, **caractérisé en ce que** les données des deux capteurs de segment de soutènement de tunnel sont combinées aux données du capteur de segment de soutènement de tunnel supplémentaire.

18. Procédé selon l'une quelconque des revendications 10 à 17, **caractérisé en ce qu'**une unité d'amenée (segment feeder en anglais) est commandée pour amener le segment de soutènement de tunnel jusqu'à un lieu de chargement de façon à permettre un chargement grâce à l'outil de la commande, de sorte que le segment de soutènement de tunnel soit mis à disposition par la commande.

19. Procédé selon l'une quelconque des revendications 10 à 18, **caractérisé en ce que** les presses de poussée de la machine de percement de tunnel sont commandées par la commande de façon à pouvoir être rentrées et sorties, de sorte que celles-ci soient comprimées contre les segments de soutènement de tunnel placés.

20. Procédé selon l'une quelconque des revendications 10 à 19, **caractérisé en ce qu'**après que le dernier segment de soutènement de tunnel (pierre de recouvrement) du segment de bague de soutènement de tunnel ait été monté, le manipulateur mesure à l'aide d'au moins deux caméras de temps de vol une distance entre les segments de soutènement de tunnel du segment de bague de soutènement de tunnel et une paroi de trou d'alésage de la section de tunnel, de façon préférée en parcourant au moins en partie le segment de bague de soutènement de tunnel.

21. Procédé selon l'une quelconque des revendications 10 à 20, **caractérisé en ce qu'**après le placement du segment de soutènement de tunnel au niveau de la position théorique, l'outil du manipulateur reste relié au segment de soutènement de tunnel placé et est déplacé conjointement en cas de compression du segment de soutènement de tunnel à l'aide d'au moins une des presses de poussée de la machine de percement de tunnel et que le mouvement de l'outil est détecté ce faisant.
